# EUROPEAN PATENT SPECIFICATION

(11) **EP 1 396 846 B1**
(45) Date of publication and mention of the grant of the patent: **16.06.2010**
(21) Application number: 03020081.0
(22) Date of filing: 04.09.2003
(51) Int. Cl.: G11B 5/00

(54) **Method and apparatus for controlling hard disc drive**
Steuerungsverfahren und -vorrichtung für Festplattenlaufwerk
Procédé et dispositif de commande pour unité de disque dur

(30) Priority: 04.09.2002 KR 2002053164
(43) Date of publication of application: 10.03.2004
(73) Proprietor: SAMSUNG ELECTRONICS CO. LTD., Suwon-city, Kyounggi-do 441-742 (KR)
(72) Inventor: Cho, Jae-deog, Paldal-gu Suwon-si Gyeonggi-do (KR)
(74) Representative: Grünecker, Kinkeldey, Stockmair & Schwanhäusser Anwaltssozietät

(56) References cited:
- EP-A- 1 134 737
- US-A- 5 742 566
- US-A1- 2003 081 337
- PATENT ABSTRACTS OF JAPAN vol. 1995, no. 04, 31 May 1995 (1995-05-31) & JP 07 006560 A (SONY CORP), 10 January 1995 (1995-01-10)
- PATENT ABSTRACTS OF JAPAN vol. 012, no. 104 (P-685), 6 April 1988 (1988-04-06) & JP 62 236173 A (TOKYO ELECTRIC CO LTD), 16 October 1987 (1987-10-16)

## Description

The present invention relates to the field of data storage systems, and more particularly, to a method and apparatus for controlling a hard disc drive, which prevent errors while reading a disc that is incorrectly magnetized while writing data on the disc due to deteriorated characteristics of a head and the disc in a low temperature environment.

A hard disc drive is one type of auxiliary memory device for a computer system, which records data on and/or reproduces data from a disc using a magnetic head. As the capacity of a disc becomes larger while the disc size becomes smaller and, accordingly, as the density of the disc measured in units such as BPI (Bits Per Inch) in the circular direction, and/or TPI (Tracks Per Inch) in the radical direction, becomes higher, the hard disc drive requires a more precise and faster control method and a more elaborate mechanism for positioning the head.

Typically, it is more difficult to record data on a recording medium at a low temperature than at a normal or a high temperature because of an increased coercive force Hc of the medium at low temperatures due to a magnetic hysteresis characteristic of the medium. Moreover, a pole tip of a magnetic head is subject to thermal expansion. Due to this thermal expansion characteristic, a pole tip that has a certain size during an initial recording period thermally expands due to heat generated by a recording current, and becomes thermally saturated after the recording current is applied for a certain time period. In other words, the pole tip retains its original size at low temperatures, however when a recording current begins to flow in response to a record command, the pole tip begins to thermally expand. After the recording current is applied for a certain time period and, accordingly, temperature is sufficiently increased, the pole tip becomes thermally saturated. Due to such thermal expansion, a flying height of a magnetic head, i.e. the height of the head from a surface of a disc, is changed. As the flying height during an initial recording period remains quite high until the pole tip is thermally expanded, there is a problem in that a level down effect of a reproduced signal or a reproducing error is likely to be accrued while reproducing a signal that was recorded during an initial recording period. In a low temperature environment, such reproducing or reading error is even more likely to be accrued.

As described above, since the characteristics of the head and the disc are deteriorated at low temperature, a conventional hard disc drive has a problem in that the disc may be incorrectly magnetized while writing or recording data on the disc, or an error is likely to be accrued while reading or reproducing data from the disc. Further, as data storage capacity becomes larger, the track pitch of the disc as well as the size of a write head become smaller and, accordingly, the intensity of magnetization becomes weaker. Particularly, at low temperature, the disc is subject to a weak write effect that deteriorates a magnetic characteristic of the disc.

US 6 335 841 B1 relates to a magnetic recording.apparatus where, in case of a head error such as a write magnetic head disconnection and a short circuit the head is moved from a data area to a spare area where recording is repeated at lower or higher recording frequencies in order to check whether a head error has been correctly detected.

US 5 995 306 provides a method for rerecording a frame on magnetic tape when a first recording of the frame is determined to be defective by reading the written data and comparing it to a buffered version, whereas the rerecording is executed at a spare or a reserved location on the tape.

It is the object of the present invention to provide a method and apparatus for controlling a hard disc drive, which prevent errors while reading a disc that is incorrectly magnetized while writing data on the disc due to deteriorated characteristics of a head and the disc in a low temperature environment, wherein writing, reading, and error detecting operations are repeated several times while recording data on the disc, and sector reassigning is performed with respect to a sector from which an error is detected.

This object is solved by the subject matters of the independent claims. Preferred embodiments are defined in the dependent claims.

It is an aspect of the present invention to provide a recording medium that is readable by a computer where a program to implement the above-described method is embedded.

A method for controlling a hard disc drive in a low temperature environment according to the present invention comprises the steps of (a) receiving a write instruction and sensing a temperature around the hard disc drive, (b) enabling a write verify function when the above sensed temperature is below a threshold temperature and recording data on a data sector, (c) reading the above recorded data and detecting a recording error, and (d) recording data on a reserved sector when the recording error is detected in the above step (c).

Meanwhile, an apparatus for controlling a hard disc drive in a low temperature environnement according to the present invention comprises a buffer that temporarily stores data provided to and from a host computer, a thermal sensor that senses a temperature around the hard disc drive, and a controller that enables a write verify function when the temperature sensed by the thermal sensor is below a threshold temperature, detects a recording error by reading and comparing data recorded on a data area sector with the data stored in the buffer, and seeks a reserved track and generates an instruction to record data on a reserved sector when the recording error is detected.

The above advantages of the present invention will become more apparent by describing preferred embodiments thereof with reference to the attached drawings in which:
FIG. 1 shows a structure of a hard disc drive according to the present invention;
FIG. 2 shows an embodiment of a disc including data areas for recording data and a reserved area having reserved sectors for reassignment;
FIG. 3a shows a format of a sector among a plurality of sectors forming tracks of a disc, and FIG. 3b shows a detailed scheme of servo information recorded on a servo sector;
FIG. 4 is block diagram of an apparatus for controlling a hard disc drive according to the present invention; and
FIG. 5 is a flow chart of a method for controlling a hard disc drive according to the present invention.

In considering the weak write effect, a write verify function is performed in a low temperature mode, which repeats writing and reading in accordance with an error rate that is obtained by reading and comparing data recorded on the disc in response to a write instruction with original data. However, since the characteristics of the surface of the disc vary with location on the surface of the disc, the weak write effect and the reading error due to the weak write effect are still accrued even by the write verify function in particular areas of the disc where the magnetic characteristic becomes worse at low temperature.

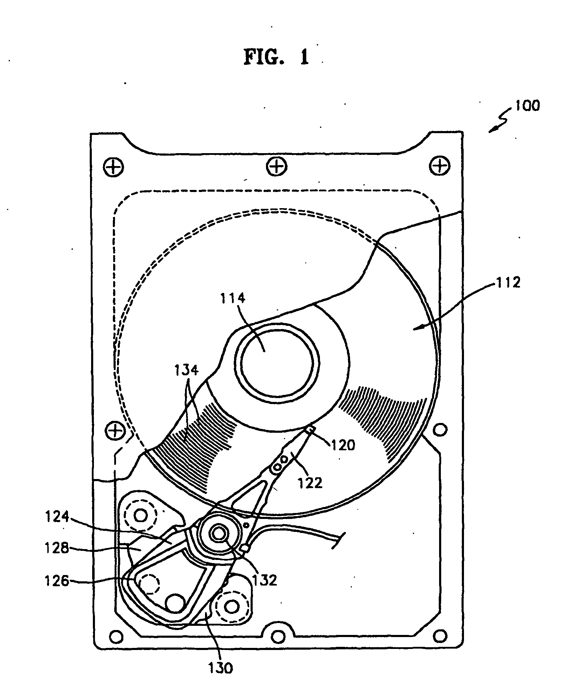

A preferred embodiment of the present invention will be described below with reference to the attached drawings. Referring to FIG. 1, there is shown a structure of a hard disc drive according to the present invention. A hard disc drive 100 includes a disc 112 that is rotated by a spindle motor 114. Additionally, the hard disc drive 100 includes a converter (not shown) that is placed adjacent to a surface of the disc 112. The converter can read information from the disc 112 by sensing magnetic fields formed on the surface of the disc 112 or record information on the disc 112 by magnetizing the surface of the disc 112. Although only a single converter is referred in this description, it will be understood that the converter includes a recording converter for magnetizing the disc 112 and a separate reading converter for sensing magnetic fields from the disc 112.

The converter may be integrated with a head 120. The head 120 is structured to form an air bearing between the converter and the surface of the disc 112. The head 120 is mounted to a head stack assembly (HAS) 122, and the head stack assembly 120 is attached to an actuator arm 124 that has a voice coil 126. The voice coil 126 is placed adjacent to a magnetic assembly 128 that specifies a voice coil motor (VCM) 130. A current provided to the voice coil 126 causes a torque to rotate the actuator arm 124 with respect to a bearing assembly 132, and the rotation of the actuator arm 124 moves the converter across the surface the disc 112.

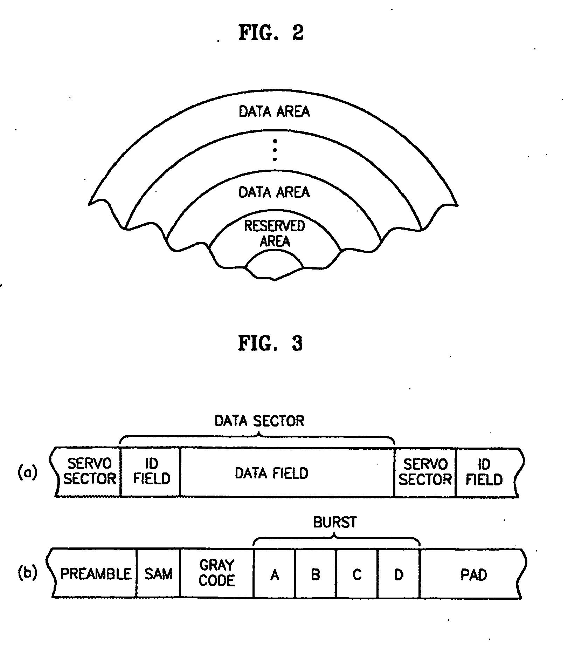

FIG. 2 shows an embodiment of a disc including data areas for recording data and a reserved area having reserved sectors for reassignment. Resulting from demands for cheaper and larger capacity hard disc drives, there have been several approaches to improving recording density. One of such approaches involves so-called zone bit recording (ZBR) technology. In zone bit recording, the surface of a disc is divided into a plurality of zones, and each zone has a plurality of tracks. While clock frequencies for recording and reproducing are the same in the same zone, they are different in different zones. Specifically, the frequencies for recording and reproducing become higher toward the outside of the disc. Therefore, by averaging bits per inch (BPI) from the inside to the outside of the disc, the recording capacity of the entire disc can be increased. A disc incorporating zone bit recording technology includes reserved sectors and data areas for recording data. The data areas are partitioned from the outermost zone to the innermost zone. Further, an area for data reassignment is provided inside of the innermost zone, and the reserved sectors are placed in that area. The area for data reassignment is called a reserved area, and is formed with one or more tracks.

FIG. 3a shows a format of a sector among a plurality of sectors forming tracks of a disc, and FIG. 3b shows a detailed scheme of servo information recorded on a servo sector. Information is stored in circular tracks of a disc. Typically, the disc includes a data zone where user's data is recorded, a parking zone where a head is placed while a drive is not in use, and a maintenance cylinder. Generally, each of the tracks includes a plurality of sectors. Each sector comprises a data sector including a data field and an identification (ID) field, and a servo sector including servo information. Additionally, an inter sector gap (ISG) area is provided between each of the data sectors. Digital data is recorded in the data field, and information for identifying a sector and a track or cylinder is recorded in the identification field. The servo information recorded in the servo field includes a preamble, a servo address mark (SAM), a gray code, a burst, and a PAD. The preamble that is also referred to as servo sync provides clock synchronization while reading the servo information and, at the same time, indicates the servo sector by providing a gap prior to the servo sector. The SAM indicates a beginning of the servo to provide synchronization for reading the gray code, and provides a reference point for generating timing pulses with respect to the servo control. The gray code provides a track number for each track. The burst provides a position error signal (PES) required for searching and following tracks. The PAD provides a transition margin between the servo sector and the data sector. As described above with reference to FIG. 1, the converter moves across the surface of the disc 112 to read or record Information in other tracks.

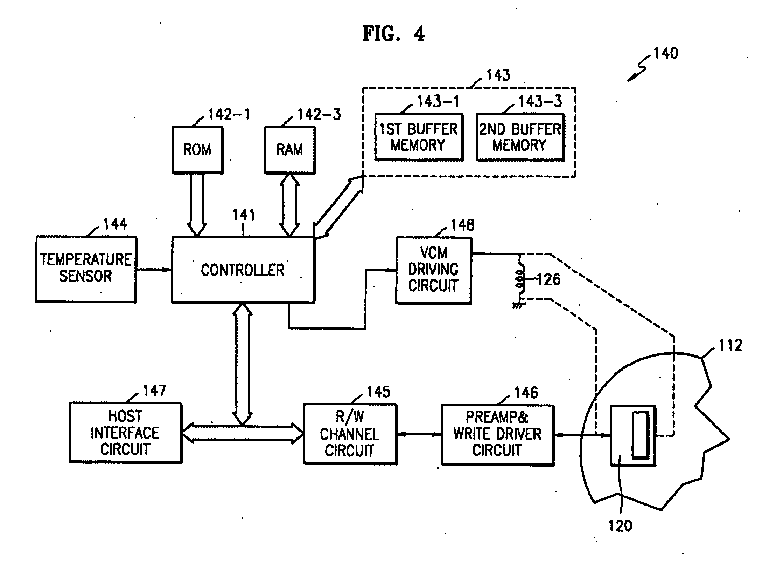

FIG. 4 is block diagram of an apparatus for controlling a hard disc drive according to the present invention. The apparatus 140 for controlling a hard disc drive comprises a controller 141 that is connected to a head 120 through a read/write (R/W) channel circuit 145 and a pre-amp and write driver circuit 146. The controller 141 may be a digital signal processor (DSP), a microprocessor, a micro-controller, or the like. The controller 141 provides a control signal to the R/W channel 145 to read data from or to record data on the disc 112. Particularly, in a low temperature environment in which the temperature sensed by a temperature sensor 144 is below 10°C, the controller 141 provides a control signal to enable write verify function and to reassign reserved sectors where data is reassigned when an error is accrued as a result of reading the recorded data and measuring a bit error rate. Information is typically transferred from the R/W channel 145 to a host interface circuit 147. The host interface circuit 147 includes a control circuit that allows interface between a disc drive and a computer system such as a personal computer.

In a reproducing or reading mode, the R/W channel circuit 145 converts an analog signal that is detected by the head 120 and amplified by the pre-amp circuit 146 to a digital signal that can be read by a host computer (not shown), and provides the digital signal to the host interface circuit 147. Further, the R/W channel circuit 145 receives user data from the host computer through the host interface circuit 147, and implements signal processing such that the user data is converted to a recoding current and, then, the recording current is provided to the write driver circuit 146. The controller 141 is also connected to a voice coil motor (VCM) driving circuit 148 that provides a driving current to a voice coil 126. The controller 141 provides a control signal to the VCM driving circuit 148 to control the flow of current to a VCM and motion of the converter.

Furthermore, the controller 141 is connected to a read only memory (ROM) 142-1 or other non-volatile memory such as flash memory, and to a random access memory (RAM) 142-3. The memory devices 142-1 and 142-3 store instructions and data to be used by the controller 141 to implement a software routine. As the software routine, there is a seek routine for moving the converter from one track to another and a following routine for finding out an objective sector in a track. The seek routine includes a servo control routine for ensuring the moving of the converter to a correct track. The memory devices 142-1 and 142-3 further store, for example, equations for acceleration, speed, and position tracing.

Moreover, the memory devices 142-1 and 142-3 store a program for enabling a write verify function and a reassign function, and a threshold temperature value. Therefore, in the event that the temperature sensed by the temperature sensor 144 is below the threshold temperature, the controller 141 enables the write verify function that is implemented in a low temperature mode. The threshold temperature is decided as a temperature from which recording performance begins to drop, in consideration of values such as a contraction rate of a pole tip, a coercive force of a recording medium, etc. The buffer memory 143 includes a first buffer memory 143-1 where data to be recorded is stored on record instructions from the host computer, and a second buffer memory 143-3 where data reproduced from the disk 112 is temporarily stored.

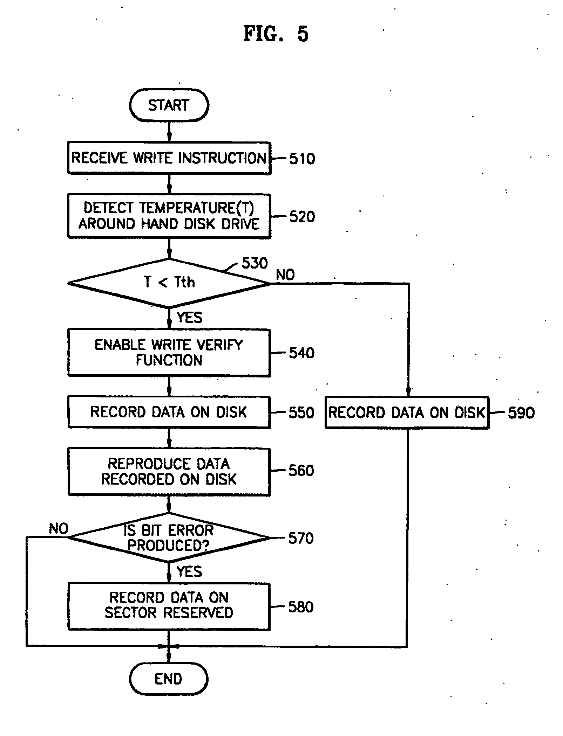

FIG. 5 is a flow chart for explaining a method for controlling a hard disc drive according to the present invention. If the host computer generates a write instruction for recording data, then the first buffer memory 143-1 stores the data to be recorded, and the controller 141 receives the write instruction and searches an objective track (step 510). Thereafter, if the thermal sensor 144 detects a temperature T around the hard disc drive (step 520), then the controller 141 decides whether the temperature T around the hard disc drive is below a threshold temperature Tₜₕ (step 530). As describe above, the threshold temperature Tₜₕ is decided as a temperature from which recording performance begins to drop, in consideration of values such as a contraction rate of a pole tip, a coercive force of a recording medium, etc. Generally, the threshold temperature Tₜₕ is decided as 10°C.

If the temperature sensed by the temperature sensor 144 is below the threshold temperature Tₜₕ in the above step 530, then the write verify function is enabled (step 540). If the write verify function is enabled, the data subject to the record instruction is recorded on the sectors in a data area of the disc by way of a magnetic recording head included in the head 120 (step 550), and thereafter, the data recorded on the disc is reproduced by a magnetic reading head of the head 120 (step 560). The reproduced data is stored in the second buffer memory 143-3. The data reproduced and then stored in the second buffer memory 143-3 is compared with original data stored in the first buffer memory 143-1 to decide whether a bit error is produced (step 570). If the bit error is produced in the above step 570, then the controller 141 enables a sector reassign function to search a reserved area on the disc 112 and to record the data subject to the record instruction from the host computer on reserved sectors in the reserved area (step 580). If the bit error is not produced in the above step 570, then the recording operation ends with the data recorded in the data area. Meanwhile, if the temperature T sensed by the temperature sensor 144 is greater than the threshold temperature Tₜₕ in the above step 530, the data stored in the first buffer memory is recorded on the disc (step 590) and then the recording operation ends.

The above-mentioned sector reassign in a hard disc drive is a technique that substitutes a reserved sector for a defective sector where an error is accrued. Since access to the defective sector is avoided by the sector reassign technique, user data is safely protected. The sector reassign function is performed when a write fault is produced. The write fault may be produced in the event that an absolute value of a position error signal (PES), which is detected due to defects in servo information, is great, or in the event that it becomes difficult to detect identification (ID) of a servo sector due to damage to the ID of the servo sector, or by search errors, etc.

The present invention can be implemented on a recording medium that can be read from by a computer with a code that is readable by the computer. The recording medium that can be read from by a computer may include any kind of recording devices in which data that is readable by the computer is stored. Examples of the recording medium include ROM, RAM, CD-ROM, magnetic tape, hard discs, floppy discs, flash memory, optical data storage devices, and even carrier wave, for example, transmission over the Internet. Moreover, the recording medium may be distributed among computer systems that are interconnected through a network, and the present invention may be stored and implemented as a code in the distributed system.

As described above, according to the present invention, data or information can be recorded in a stable area, not in a defective sector where an error is accrued, using a write verify function and an automatic sector reassign function in a low temperature mode, and therefore, reliability of recording and reproduction of the information is improved.

While the present invention has been particularly shown and described with reference to preferred embodiments thereof, it will be understood by those of ordinary skill in the art that various changes in form and details may be made therein without departing from the scope of the present invention as defined by the appended claims.

## Claims

1. A method for recording data in a hard disc drive (100) in a low-temperature environment comprising the steps of:
(a) receiving a write instruction and sensing a temperature (T) around the hard disc drive;
(b) enabling a write verify function when the sensed temperature (T) is below a threshold temperature (Tₜₕ) and recording data on a data sector;
(c) reading the recorded data and detecting a recording error; and
(d) recording data on a reserved sector when the recording error is detected in the above step (c).

2. The method for recording data in a hard disc drive according to claim 1, wherein the above write verify function repeats the steps (b) and (c) for a predetermined time.

3. The method for recording data in a hard disc drive according to claim 1 or 2, wherein the step (b) further comprises disabling the write verify function if the temperature around the hard disc drive is above the threshold temperature and recording the data on a data area of a disc.

4. The method for recording data in a hard disc drive according to one of claims 1 to 3, wherein the step (c) further comprises the step of detecting a recording error by comparing data stored in a buffer with the above read data.

5. The method for recording data in a hard disc drive according to one of claims 1 to 4, wherein the step (d) further comprises designating one of a plurality of reserved sectors on a magnetic disc when the recording error is detected, and recovering the data recorded on the data sector and recording that data on the designated reserved sector.

6. An apparatus for controlling a hard disc drive (100) in a low-temperature environment comprising:
a buffer (143) arranged for temporarily storing data inputted to and outputted from a host computer;
a thermal sensor (144) arranged for sensing a temperature (T) around the hard disc drive; and
a controller (141) arranged for enabling a write verify function when the temperature sensed by the thermal sensor is below a threshold temperature (Tₜₕ), detecting a recording error by reading and comparing data recorded on a data sector with the data stored in the buffer (143-3), and seeking a reserved track and generating an instruction to record data on a reserved sector when the recording error is detected.

7. The apparatus for controlling a hard disc drive (100) according to claim 6, wherein the controller is further arranged for disabling the write verify function if the temperature around the hard disc drive is above the threshold temperature and recording the data on a data area of a disc.

8. The apparatus for controlling a hard disc drive according to claim 6 or 7, wherein the controller is further arranged for designating one of a plurality of reserved sectors on a magnetic disc when the recording error is detected, and recovering the data recorded on the data sector and recording that data on the above designated reserved sector.

9. A computer readable recording medium that stores a program for the computer to implement the method claimed in one of claims 1 to 5.

## Patentansprüche

1. Verfahren zum Aufzeichnen von Daten in einem Festplattenlaufwerk (100) in einer Niedrigtemperaturumgebung, das die folgenden Schritte umfasst:
(a) Empfangen eines Schreibbefehls und Erfassen einer Temperatur (T) um das Festplattenlaufwerk herum;
(b) Aktivieren einer Schreib-Prüffunktion, wenn die erfasste Temperatur (T) unterhalb einer Schwellenwerttemperatur (Tₜₕ) liegt, und Aufzeichnen von Daten in einem Datensektor;
(c) Lesen der aufgezeichneten Daten und Erfassen eines Aufzeichnungsfehlers; und
(d) Aufzeichnen von Daten in einem reservierten Sektor, wenn in dem obenstehenden Schritt (c) der Aufzeichnungsfehler erfasst wird.

2. Verfahren zum Aufzeichnen von Daten in einem Festplattenlaufwerk nach Anspruch 1, wobei die obenstehende Schreib-Prüffunktion die Schritte (b) und (c) über eine vorgegebene Zeit wiederholt.

3. Verfahren zum Aufzeichnen von Daten in einem Festplattenlaufwerk nach Anspruch 1 oder 2, wobei der Schritt (b) des Weiteren umfasst, dass die Schreib-Prüffunktion deaktiviert wird, wenn die Temperatur um das Festplattenlaufwerk herum über der Schwellenwerttemperatur liegt, und die Daten in einem Datenbereich einer Platte aufgezeichnet werden.

4. Verfahren zum Aufzeichnen von Daten in einem Festplattenlaufwerk nach einem der Ansprüche 1 bis 3, wobei der Schritt (c) des Weiteren den Schritt des Erfassens eines Aufzeichnungsfehlers durch Vergleichen in einem Puffer gespeicherter Daten mit den obenstehenden gelesenen Daten umfasst.

5. Verfahren zum Aufzeichnen von Daten in einem Festplattenlaufwerk nach einem der Ansprüche 1 bis 4, wobei der Schritt (d) des Weiteren umfasst, dass einer einer Vielzahl reservierter Sektoren auf einer Magnetplatte bestimmt wird, wenn der Aufzeichnungsfehler erfasst wird, und die in dem Datensektor aufgezeichneten Daten wiederhergestellt werden und diese Daten in dem bestimmten reservierten Sektor aufgezeichnet werden.

6. Vorrichtung zum Steuern eines Festplattenlaufwerks (100) in einer Niedrigtemperaturumgebung, die umfasst:
einen Puffer (143), der zum temporären Speichern von Daten eingerichtet ist, die in einen Host-Computer eingegeben und von ihm ausgegeben werden;
einen Wärmesensor (144), der zum Erfassen einer Temperatur (T) um das Festplattenlaufwerk herum eingerichtet ist; und
eine Steuereinrichtung (141), die so eingerichtet ist, dass sie eine Schreib-Prüffunktion aktiviert, wenn die durch den Wärmesensor erfasste Temperatur unterhalb einer Schwellenwerttemperatur (Tₜₕ) liegt, einen Aufzeichnungsfehler erfasst, indem sie in einem Datensektor aufgezeichnete Daten liest und mit den in dem Puffer (134-3) gespeicherten Daten vergleicht, und eine reservierte Spur sucht und einen Befehl zum Aufzeichnen der Daten in einem reservierten Sektor erzeugt, wenn der Aufzeichnungsfehler erfasst wird.

7. Vorrichtung zum Steuern eines Festplattenlaufwerks (100) nach Anspruch 6, wobei die Steuereinrichtung des Weiteren so eingerichtet ist, dass sie die Schreib-Prüffunktion deaktiviert, wenn die Temperatur um das Festplattenlaufwerk herum oberhalb der Schwellenwerttemperatur liegt, und die Daten in einem Datenbereich einer Platte aufzeichnet.

8. Vorrichtung zum Steuern eines Festplattenlaufwerks (100) nach Anspruch 6 oder 7, wobei die Steuereinrichtung des Weiteren so eingerichtet ist, dass sie einen einer Vielzahl reservierter Sektoren auf einer Magnetplatte bestimmt, wenn der Aufzeichnungsfehler erfasst wird, und die in dem Datensektor aufgezeichneten Daten wiederherstellt und diese Daten in dem obenstehenden bestimmten reservierten Sektor aufzeichnet.

9. Computerlesbares Aufzeichnungsmedium, das ein Programm zum Implementieren des Verfahrens nach einem der Ansprüche 1 bis 5 durch den Computer speichert.

## Revendications

1. Procédé d'enregistrement de données dans une unité de disque dur (100) dans un environnement à basses températures comprenant les étapes de :
(a) réception d'une instruction d'écriture et capture d'une température (T) autour de l'unité de disque dur ;
(b) validation d'une fonction de vérification d'écriture lorsque la température relevée (T) est inférieure à une température seuil (Tₜₕ) et enregistrement de données sur un secteur de données ;
(c) lecture des données enregistrées et détection d'une erreur d'enregistrement ; et
(d) enregistrement de données sur un secteur retenu lorsque l'erreur d'enregistrement est détectée dans l'étape ci-dessus (c).

2. Procédé d'enregistrement de données dans une unité de disque dur selon la revendication 1, où la fonction de vérification d'écriture ci-dessus répète les étapes (b) et (c) pour une période prédéterminée.

3. Procédé d'enregistrement de données dans une unité de disque dur selon la revendication 1 ou 2, où l'étape (b) comprend en outre l'arrêt de la fonction de vérification d'écriture si la température autour de l'unité de disque dur est supérieure à la température seuil et l'enregistrement de données sur une piste de données d'un disque.

4. Procédé d'enregistrement pour enregistrer les données dans une unité de disque dur selon l'une des revendications 1 à 3, où l'étape (c) comprend en outre l'étape de détection d'une erreur d'enregistrement en comparant les données enregistrées dans une mémoire tampon avec les données lues ci-dessus.

5. Procédé d'enregistrement des données dans une unité de disque dur selon l'une des revendications 1 à 4, où l'étape (d) comprend en outre la désignation d'un secteur retenu parmi une pluralité de secteurs retenus sur un disque magnétique lorsque l'erreur d'enregistrement est détectée, ainsi que la récupération des données enregistrées sur le secteur de données et leur enregistrement sur le secteur retenu désigné.

6. Dispositif de commande d'une unité de disque dur (100) dans un environnement à basses températures comprenant :
une mémoire tampon (143) pour l'enregistrement temporaire de données entrées dans et sorties d'un ordinateur hôte ;
un capteur thermique (144) pour la capture d'une température (T) autour de l'unité de disque dur ; et
un contrôleur (141) pour valider une fonction de vérification de l'écriture lorsque la température relevée par le capteur thermique est inférieure à une température seuil (Tₜₕ), pour détecter une erreur d'enregistrement en lisant et en comparant des données enregistrées sur un secteur de données avec les données enregistrées dans la mémoire tampon (143-3), et pour rechercher une voie retenue et pour générer une instruction pour enregistrer les données sur un secteur retenu lorsque l'erreur d'enregistrement est détectée.

7. Dispositif de commande d'une unité de disque dur (100) selon la revendication 6, où le contrôleur est conçu pour arrêter la fonction de vérification d'écriture si la température autour de l'unité de disque dur est supérieure à la température seuil, et pour enregistrer les données sur une piste de données d'un disque.

8. Le dispositif de commande d'une unité de disque dur selon les revendications 6 ou 7, où le contrôleur est également conçu pour désigner un secteur retenu parmi une pluralité de secteurs retenus sur un disque magnétique lorsque l'erreur d'enregistrement est détectée, et pour récupérer les données sur le secteur des données et les enregistrer sur le secteur retenu désigné ci-dessus.

9. Un média d'enregistrement lisible par l'ordinateur comprenant un programme pour l'ordinateur afin de mettre le procédé revendiqué selon les revendications 1 à 5 en oeuvre.
